(19) Europäisches Patentamt

European Patent Office

Office européen des brevets

(11) **EP 2 437 452 A1**

(12) **EUROPEAN PATENT APPLICATION**

(43) Date of publication:
**04.04.2012 Bulletin 2012/14**

(51) Int Cl.:
***H04L 27/26*** (2006.01)

(21) Application number: **11183728.2**

(22) Date of filing: **03.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.10.2010 US 896994**

(71) Applicant: **Cisco Technology, Inc.**
**San Jose, CA 95134-1706 (US)**

(72) Inventors:
• **Janani, Mohammad**
**Plano, TX Texas 75093 (US)**

• **Mandava, Mahendra**
**Richardson, TX Texas 75082 (US)**
• **Hedayat, Ahmadreza**
**Allen, TX Texas 75013 (US)**
• **Peterson, Bror**
**Murphy, TX Texas 75094 (US)**

(74) Representative: **Kazi, Ilya**
**Mathys & Squire LLP**
**120 Holborn**
**London EC1N 2SQ (GB)**

(54) **Adaptive clipping of symbols based on signal quality**

(57) Techniques are provided for crest factor reduction of a symbol to be transmitted by a communication device. The symbol may be an orthogonal frequency division multiplexed (OFDM) formatted symbol. In a communication device, samples of the symbol are clipped with a clipping level. A signal quality of the symbol is computed after it is clipped. A determination is made as to whether the signal quality satisfies a predetermined criterion. When the signal quality does not satisfy the predetermined criterion, the clipping level is adjusted. The clipping, computing, determining and adjusting operations are repeated until the signal quality satisfies the predetermined criterion. The symbol clipped by the clipping level determined to result in satisfying the predetermined criterion is output for supply to a transmitter in the communication device. Techniques for computing for error vector magnitude that are faster and less computationally intensive are provided, as well as a computation for distortion that can be used as a measure of error vector magnitude.

FIG.1

## Description

TECHNICAL FIELD

The present disclosure relates to communication devices and systems.

BACKGROUND

In communication networks, data is formatted for transmission over a link (wired or wireless) from a source device to a destination device. One technique to format data employs orthogonal frequency division multiplexing (OFDM) techniques wherein a frequency band of a channel (wired or wireless) comprises a relatively large number of closely-spaced orthogonal subcarriers to carry data. The data is divided into several parallel data streams or channels, one for each subcarrier. Each subcarrier is modulated, such as with quadrature amplitude modulation or phase-shift keying modulation techniques.

One of the drawbacks of OFDM signals is their relatively high peak-to-average ratio (PAPR) caused by the summation of Fast Fourier Transform (FFT) sinusoids over signals with high efficiency modulations. In a wireless communication device, the OFDM symbols are converted to analog signals, upconverted to a desired transmission frequency and amplified by a power amplifier before coupling to a transmit antenna. The high PAPR of an OFDM symbol reduces the linear dynamic range of the power amplifier. In order to avoid operating the power amplifier in its non-linear range, the power amplification can be reduced to thereby minimize non-linear effects such as degradation in error vector magnitude of the signal and out-of-band emissions. Another solution is to use a higher power amplifier, but that increases the cost of the wireless communication device.

Still another method to reduce PAPR is to clip the symbol in the time domain to a certain level to remove high peaks in the signal. Clipping increases error vector magnitude and increases out-of-band emissions. There is room for improving clipping techniques in order simplify the implementation complexity and achieve improved reduction of PAPR.

BRIEF DESCRIPTION OF THE DRAWINGS

FIG. 1 is an example of a block diagram of a wireless communication device configured to adaptively clip symbols according to the techniques described herein.

FIG. 2 is an example of a flow chart depicting operations of the adaptive symbol clipping techniques.

FIGs. 3-5 illustrate examples of iterations of the adaptively symbol clipping operations.

FIG. 6 is an example of a plot showing a relationship between distortion and error vector magnitude and highlighting the usefulness of a distortion signal quality metric according to the adaptive clipping techniques described herein.

FIG. 7 is an example of a plot illustrating the improved performance achieved by the adaptive clipping techniques described herein.

DESCRIPTION OF EXAMPLE EMBODIMENTS

Overview

Techniques are provided for crest factor reduction of a symbol to be transmitted by a communication device. The symbol may be an orthogonal frequency division multiplexed (OFDM) formatted symbol. In a communication device, samples of the symbol are clipped with a clipping level. A signal quality of the symbol is computed after it is clipped. A determination is made as to whether the signal quality satisfies a predetermined criterion. When the signal quality does not satisfy the predetermined criterion, the clipping level is adjusted. The clipping, computing, determining and adjusting operations are repeated until the signal quality satisfies the predetermined criterion. The symbol clipped by the clipping level determined to result in satisfying the predetermined criterion is output for supply to a transmitter in the communication device. The techniques described herein are applicable to OFDM symbols as well as other types of non-OFDM symbols. Moreover, the techniques described herein are applicable to wireless and wired communication devices and networks. Techniques for computing for error vector magnitude that are faster and less computationally intensive are provided, as well as a computation for distortion that can be used as a measure of error vector magnitude.

Example Embodiments

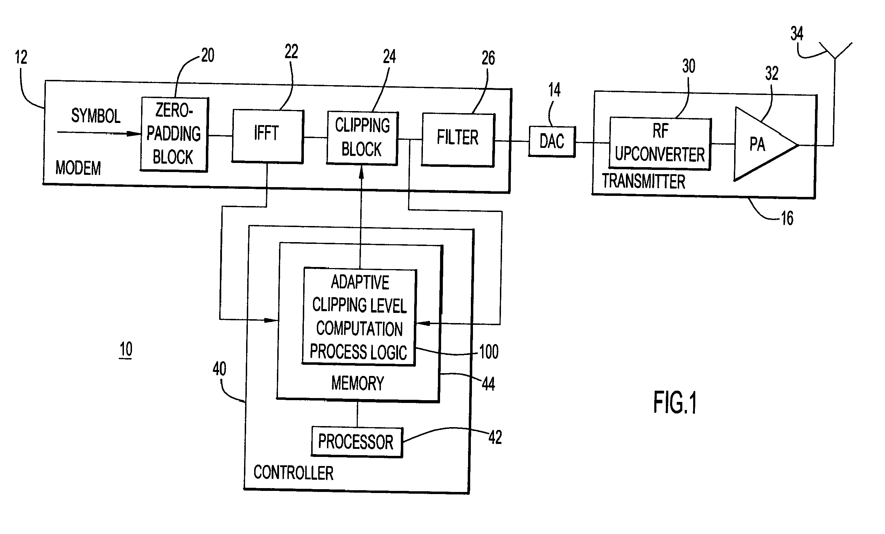

Referring first to FIG. 1, a block diagram is shown of a wireless communication device 10 that is configured to adaptively clip symbols. The device 10 comprises a modem 12, a digital-to-analog converter (DAC) 14, a transmitter 16 and an antenna 22. For simplicity, FIG. 1 shows portions of only the transmit hardware of the device 10. However, it should be understood that the device 10 also has hardware components configured to perform signal reception operations.

The modem 12 comprises various blocks to perform modulation of signals to be transmitted and demodulation of signals that are received. For simplicity, the blocks shown inside the modem 12 are only those blocks that pertain to the adaptively clipping techniques. To this end, there is a zero-padding block 20, an Inverse Fast Fourier Transform (IFFT) block 22, a clipping block 24 and a filter 26. The zero-padding block 20 is configured to receive samples of a symbol to be transmitted. The output of the zero-padding block 20 is coupled to an input of the IFFT block 22. The output of the IFFT block is coupled to the clipping block 24, and the output of the clipping block 24 is coupled to an input of the filter 26. The filter outputs clipped and filtered time-domain samples of a symbol to an input of the DAC 14. The output of the DAC 14 is coupled to an input of the transmitter 16. The modem 12 may be implemented by digital logic gates in an application specific integrated circuit (ASIC), in one example.

The transmitter 16 comprises an RF upconverter 30, e.g., mixer, and a power amplifier (PA) 20. The output of the power amplifier 32 is coupled to the transmit antenna 34.

The clipping block 24 is controlled by outputs from a controller 40. The controller 40 comprises a processor 42, e.g., microprocessor, microcontroller, digital signal processor, etc., and memory 44. Stored within memory 44 are instructions for adaptive clipping level computation process logic 100. The process logic 100 may be embodied as computer executable instructions stored or encoded in one or more computer readable storage media (i.e., a memory device) and when executed by a processor or computer, operable to cause the processor or computer to perform the operations described herein in connection with process logic 100. The memory 44 may comprise read only memory (ROM), random access memory (RAM), magnetic disk storage media devices, optical storage media devices, flash memory devices, electrical, optical, acoustical or other physical/tangible memory storage devices.

While the process logic 100 is shown in FIG. 1 as being implemented by computer software executable instructions stored in memory 44, in another form the operations of the process logic 100 are integrated within the modem 12 through digital logic gates. For example, the modem 12 in a communication device may be embodied by digital logic gates in a fixed or programmable digital logic integrated circuit, which digital logic gates are configured to perform the process logic 100. In still another form, the process logic 100 may be embodied by digital signal processor instructions.

The operations of the blocks 20-26 are now generally described. The zero-padding block 20 pads the symbol with zero's. The IFFT block 22 converts the symbol to a time-domain signal comprising time-domain samples. The clipping block 24 clips the levels of the time-domain samples of the symbol to a clipping level supplied by the adaptive clipping level computation process logic 100. The result of the clipping block 24 is that some samples of the symbols whose values (peaks) exceed the clipping level are effectively "clipped" to the clipping level. Those sample peaks that are less than the clipping level are not affected by the clipping operation. The filter 26 filters the time-domain samples of the symbol (after it is clipped) to reduce out-of-band emissions within a mask. Any filtering technique may be used. For real-time (e.g., voice or video) data applications, filtering techniques with shorter delay profiles are desirable, such as finite impulse response or infinite impulse response filters.

The adaptive clipping level computation process logic 100 is configured to adaptively compute the clipping level used to clip a symbol in order to determine the best clipping level that guarantees that a signal quality of the resulting clipped symbol will satisfy a predetermined criterion. Examples of the signal quality are error vector magnitude and distortion, and techniques for computing these signal quality metrics are described hereinafter. The clipping level that achieves the predetermined criterion is computed individually for each symbol and thus may vary from one symbol to another symbol as explained further hereinafter. In this way, each symbol is guaranteed to satisfy the predetermined signal quality criterion before it is supplied for transmission.

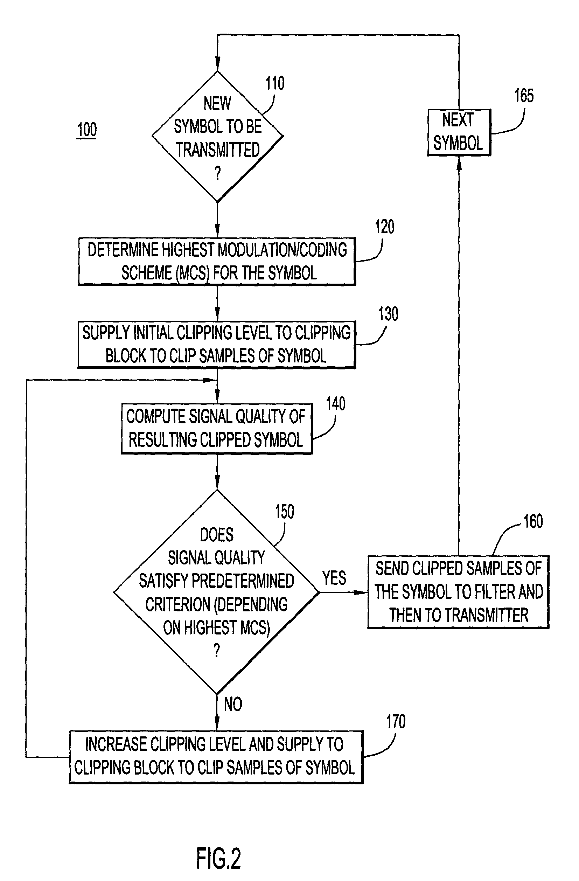

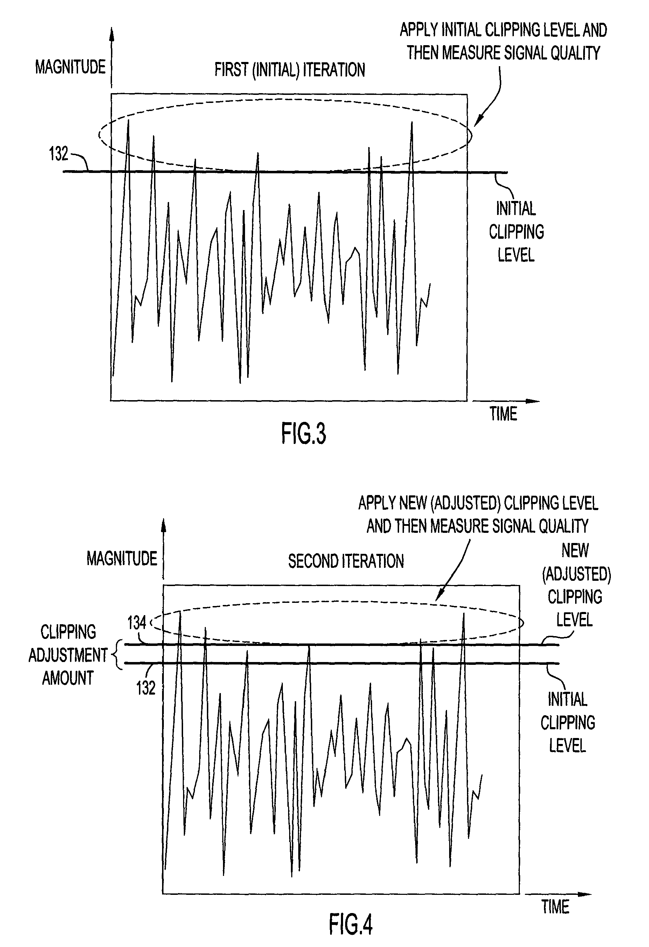

Reference is now made to FIG. 2 for a description of the process logic 100. Continued reference is also made to FIG. 1 in describing the process logic 100, as well as FIGs. 3-5. The process logic 100 is executed for each symbol to be transmitted as indicated at operation 110. When a new symbol is ready to be transmitted, then at 120, a determination is made as to the highest modulation/coding scheme for the symbol. A given symbol may be generated to be sent to multiple users and with a modulation/coding scheme that is at the highest modulation/coding scheme possible given the channel conditions for all of the intended recipient devices. The determination of the modulation/coding scheme at operation 120 is used to set the predetermined criterion for the signal quality evaluation made at operation 150 as described hereinafter.

At 130, a control signal indicating an initial clipping level is supplied to the clipping block 24 for a new symbol to be transmitted. The initial clipping level is set to a most aggressive clipping level. The clipping block 24 clips the time-domain samples of the symbol using the initial clipping level. FIG. 3 illustrates an example of time-domain samples of a symbol subjected to the initial clipping level shown at reference numeral 132. All of the time-domain samples whose values (peaks) are above the initial clipping level 132 are clipped to the initial clipping level as indicated by the dotted oval in FIG. 3. This clipping operation is a polar clipping operation that leaves the phase unchanged but the magnitude of the samples which are higher than the initial clipping are clipped to the initial clipping level. This obviously affects only a certain percentage of the samples of the symbols, those samples with values above the initial clipping level. Again, the initial clipping level is the most aggressive amount of clipping to be imposed on the time-domain samples of the symbol.

After the symbol is initial clipped at 130, then at 140, a signal quality of the symbol after it is clipped is computed. Examples of signal quality metrics and their computations are described in more detail hereinafter. At 150, the signal quality is evaluated to determine whether it satisfies a predetermined criterion, e.g., meets or exceeds (greater than or equal to) a threshold. As explained above, the predetermined criterion may be set based on the highest modulation/coding scheme for the symbol. For example, if the highest modulation/coding scheme for a given symbol is 64 quadrature amplitude modulation, the predetermined criterion may be more rigorous (e.g., a higher EVM or rigorous distortion measure) than if the highest modulation/coding scheme is 16 quadrature amplitude modulation. Consequently, since the highest modulation/coding scheme can vary from one symbol to another, the predetermined criterion may also vary for each symbol.

When the signal quality is determined to satisfy the predetermined criterion at 150, then at 160, the samples of the clipped symbol (with the most recent clipping level) are supplied to the filter 26 and then ultimately (after RF upconversion) to the power amplifier 32 for transmission. The next symbol can thereafter be used to begin the process again at 110. It is unusual that the signal quality after the initial clipping level will satisfy the predetermined criterion. More likely, after the initial clipping level operation at 130, the evaluation at 150 will yield a negative outcome and the process proceeds to operation 170 for another iteration.

At 170, the clipping level is increased from the previous level (which after the first time through would be the initial clipping level) and a control signal is supplied to the clipping block 24 with the new clipping level so that the clipping block 24 clips the samples of the symbol with the new clipping level. FIG. 4 shows the clipping operation with the new clipping level 134 at a second iteration after the initial clipping operation. The new clipping level is higher (less aggressive) than the initial clipping level. For example, if the initial clipping level is 6 dB, then the next clipping level may be 6.2 dB or 6.4 dB. The amount that the clipping level is adjusted may be a fixed incremental amount, e.g., anywhere in the range of 0.2 dB to 0.4 dB. In another form, the adjustment amount may be dynamically determined based on the signal quality, the highest modulation/coding scheme for the symbol, the signal quality (error vector magnitude or distortion for a current iteration) computed at operation 140, and other factors. In other words, the clipping level increase amount between iterations may be computed according to the EVM or distortion computed for the current iteration. The adjustment amount may be different for each symbol and may also be different for each iteration through the adaptive clipping process for a given symbol.

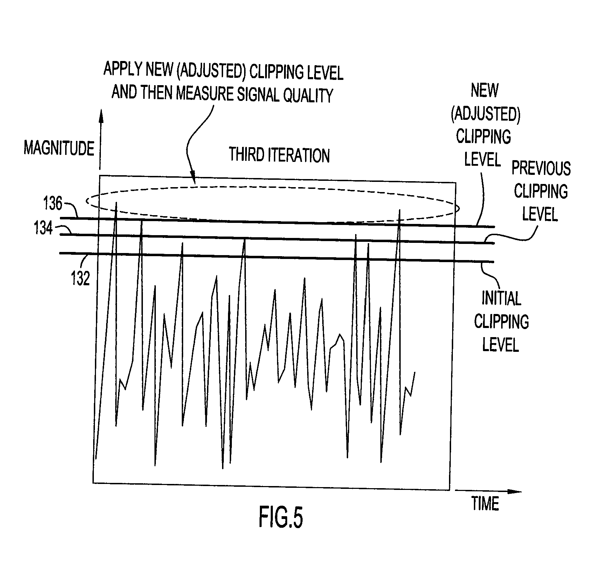

After the time-domain samples of the symbol are clipped with the new clipping level, the process goes back to operation 140 where the signal quality for the clipped symbol (with the new clipping level) is computed. The signal quality is then evaluated at operation 150 to determine whether the clipped symbol at the new clipping level satisfies the predetermined criterion. If not, then the process continues such that the clipping level is adjusted (increased) again at operation 170. FIG. 5 shows the new clipping level 136 at a third iteration. In this example, the clipping level 136 affects a still fewer number of samples of the symbol.

The loop defined by operations 140, 150 and 170 in FIG. 2 repeats until it is determined at 150 during an iteration that the signal quality of the clipped symbol satisfies the predetermined criterion, after which the clipped symbol satisfying the predetermined criterion is supplied to the filter 26, and ultimately to the power amplifier for transmission.

Thus, the operation flow depicted by FIG. 2 involves clipping samples of the symbol with a clipping level; computing a signal quality of the symbol after it is clipped by the clipping level; determining whether the signal quality satisfies a predetermined criterion; adjusting the clipping level when the signal quality does not satisfy the predetermined criterion; repeating the clipping, computing, determining and adjusting operations until the signal quality satisfies the predetermined criterion; and outputting for supply to a transmitter in a communication device samples of the symbol clipped by the clipping level determined to satisfy the predetermined criterion. The samples of the symbol are initially clipped to an initial clipping level and the clipping level is incrementally increased at the next iteration. The clipping, computing, determining, adjusting, repeating and outputting operations are performed for each of a plurality of symbols to be transmitted such that each symbol is clipped by a corresponding clipping level determined to result in the signal quality satisfying the predetermined criterion. As explained herein, the predetermined criterion may be based on a highest modulation/coding scheme for the symbol and may vary across symbols. Moreover, the clipping level needed to satisfy the predetermined criterion may be different across symbols.

The signal quality metric computed at operation 150 in FIG. 2 is a metric that reflects errors in the symbol constellation as a result of the clipping operation. One such signal quality metric is error vector magnitude. When error vector magnitude is used, then the predetermined criterion used at operation 150 is a threshold, such as -25 dB, for example. When the error vector magnitude meets or exceeds (greater than or equal to) -25 dB, then that level of clipping is used to output the time-domain samples of the symbol for transmission.

The following description sets forth a computation technique useful for computing error vector magnitude, described thereafter. Let $X(i), i = 1, 2, ..., N$ denote an input symbol vector of N samples of an OFDM symbol. The vector is interpolated such that $X_{int}(i) = [0_{(L-1)N/2} \ X \ 0_{(L-1)N/2}]^T$, where $L$ is the interpolation ratio. The time-domain signal is represented by the vector $x = F^{-1}X_{int}$, where $F$ and $F^{-1}$ are FFT and IFFT operation matrices, respectively.

The clipping block 24 performs polar clipping on the time-domain symbol samples and the clipping operation is represented as represented as

$$x_c(i) = \begin{cases} x(i) & |x(i)| \leq A_{max} \\ \dfrac{A_{max}x(i)}{|x(i)|}, i \in C & |x(i)| > A_{max} \end{cases}, \quad \text{where}$$

$A_{max}$ is the clipping level. The set $C$ contains the indices of samples of the OFDM symbol that have been clipped.

In polar clipping, the phase of the signal remains the unchanged.

The time error in the OFDM symbol after clipping is denoted $\Delta_t = x - x_c$, where $x_c$ is the clipped symbol vector. The frequency error can be derived from the time error as $\Delta_f = F.\Delta_t$. Since not all of the samples of a symbol are clipped, only time errors for indices of C that are non-zero are computed, $C = \begin{Bmatrix} i_1 & i_2 & \cdots & i_{N_c} \end{Bmatrix}$.

Error Vector Magnitude as the Signal Quality Metric

Error vector magnitude (EVM) is defined as

$$EVM = \frac{\sqrt{\dfrac{1}{N}\displaystyle\sum_{i=(L-1)N/2+1}^{(L+1)N/2}\left|\Delta_f(i)\right|^2}}{M_{\max}},$$

where $M_{max}$ is the maximum magnitude of the modulation symbol and is set for the highest modulation of the OFDM symbol.

Thus, in one example, the signal quality computation at operation 140 involves computing EVM in the time-domain using the computation:

$$FastEVM = \frac{\sqrt{\dfrac{1}{LN}\left(\Delta_t^H B \Delta_t\right)}}{M_{\max}},$$

where the matrix $B$ is $N_c$ x $N_c$ with $b_{ij}$ elements of

$$b_{ij} = \sum_{k=(L-1)N/2+1}^{(L+1)N/2} e^{\frac{j2\pi(i-j)k}{LN}}$$

and where B is a Hermitian matrix $b_{ij}=b^*_{ij}$, $N_c$ is the number of clipped time-domain samples of a symbol and $^H$ is the Hermitian operation.

The elements $b_{ij}$ are a function of (i-j) in mod of $LN$. Therefore, the maximum possible of $b_{ij}$ in mod of $LN$ is $LN$ elements. The LN elements of $b_{ij}$ can be computed once and stored in memory. Using the indices of set $C$, the matrix $B$ can be retrieved from memory. The *FASTEVM* computation described above has a reduced complexity compared with an EVM computation that requires FFT computations and involves the complexity of $\alpha(LN)$ $\log(LN)$ in addition to N multiplications for computing the frequency error powers, where $\alpha$ is greater than one and depends on the particular FFT implementation made. In other words, standard EVM computations require multiple $LN\log(LN)$ computations. By contrast, the complexity of computing the *FASTEVM* metric is $N_c(N_c+1)/2$ ($N_c$ << N). $N_c$ is a function of the clipping level but is on the order of less than 3 percent of $LN$. For example, for a 6.2 dB clipping level (which may be the most aggressive or initial clipping level used), max($N_c$) was found to be 104 over 10000 OFDM symbols. Thus, the *FASTEVM* computation achieves a 90% reduction in complexity (assuming

$\alpha$ = 1), it does not require FFT computations and it makes use of the time-domain clipped samples of a symbol.

An example of a sequence through the process logic 100 is as follows. An initial aggressive level of PAPR level for clipping is selected, for example 6 dB. In some symbols 6 dB clipping may clip 5% of the samples of the symbol because only 5% of the samples, while in other OFDM symbols, the 6 dB clipping level may clip a greater or lesser percentage of samples.

After the initial clipping, the EVM is computed as -26 dB. The goal is to reach an EVM of -35dB, for example. Thus, the predetermined criterion in this example is a floor threshold of -35 dB. The clipping level is thus increased to 6.4 dB and the EVM for that level is computed as -32dB. The clipping level is increased again to 6.7 dB and the EVM is computed as -35dB. The process can stop and the symbol clipped at 6.7 dB is sent to the filter 26 and then ultimately to the power amplifier in the transmitter 16 for transmission. There may be some cases that increasing the clipping level might not reduce the number of clipped samples of a symbol but increasing the clipping level will result in a decrease in the EVM (or distortion).

Distortion as the Signal Quality Metric

Another signal quality metric that may be computed at operation 140 is a distortion measure. A distortion computation is even less complex than the *FASTEVM* computation. Distortion is computed to guarantee a given EVM. Distortion is defined as the power of the error of the clipped signal.

Frequency error be re-written as

$$\Delta_f = \frac{1}{\sqrt{LN}}\begin{bmatrix} F_{i_1} & F_{i_2} & \cdots & F_{i_{N_c}} \end{bmatrix}\begin{bmatrix} \Delta_t(i_1) \\ \Delta_t(i_2) \\ \vdots \\ \Delta_t(i_{N_c}) \end{bmatrix}$$

where $F_i$ is column $i$ of the FFT matrix $F$.

Distortion is computed as

$$\frac{1}{\sqrt{LN}}\left\|\Delta_f\right\|^2 = \frac{1}{\sqrt{LN}}\sum_{i\in C}\left|\Delta_t(i)\right|^2,$$

where $\|.\|^2$ is the norm operation, $N$ is the number of time-domain samples of the symbol, Nc is the number time-domain samples that are clipped, $L$ is an interpolation ratio, $\Delta_t = x - x_c$ represents a time error of the clipped symbol, x is a vector that represents the symbol in the time-domain and $x_c$ is the clipped symbol vector and $i$ is the index of samples in a set $C$ that are clipped.

The complexity of computing distortion is significantly low, i.e., $N_c$ multiplications. For example, if a symbol of 4x1024 has only 63 samples that have been clipped, then the distortion computation is only the power of the error of those 63 samples.

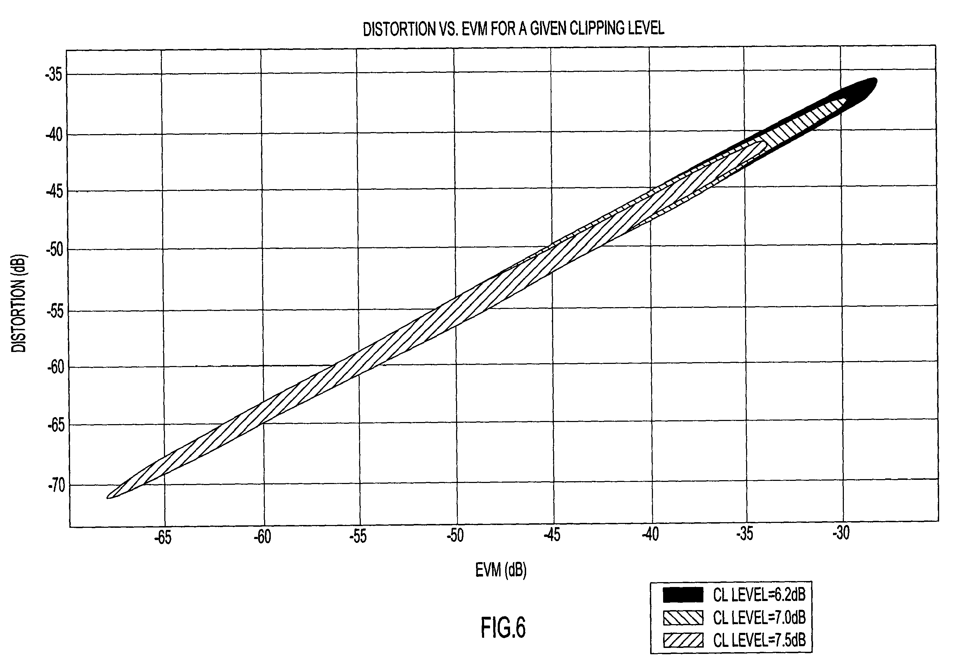

Reference is now made to FIG. 6 which shows a plot indicating that the relationship between EVM and distortion is linear within +/- 1 dB. FIG. 6 shows that a distortion level can be selected that guarantees a desired EVM limit. For example, a distortion of -43dB guarantees an EVM of -35dB or better. Thus, in one form of the adaptive clipping techniques, the signal quality metric computed at 140 is distortion and the predetermined criterion used at operation 150 for the distortion metric is a distortion threshold, e.g., -43 dB in one example.

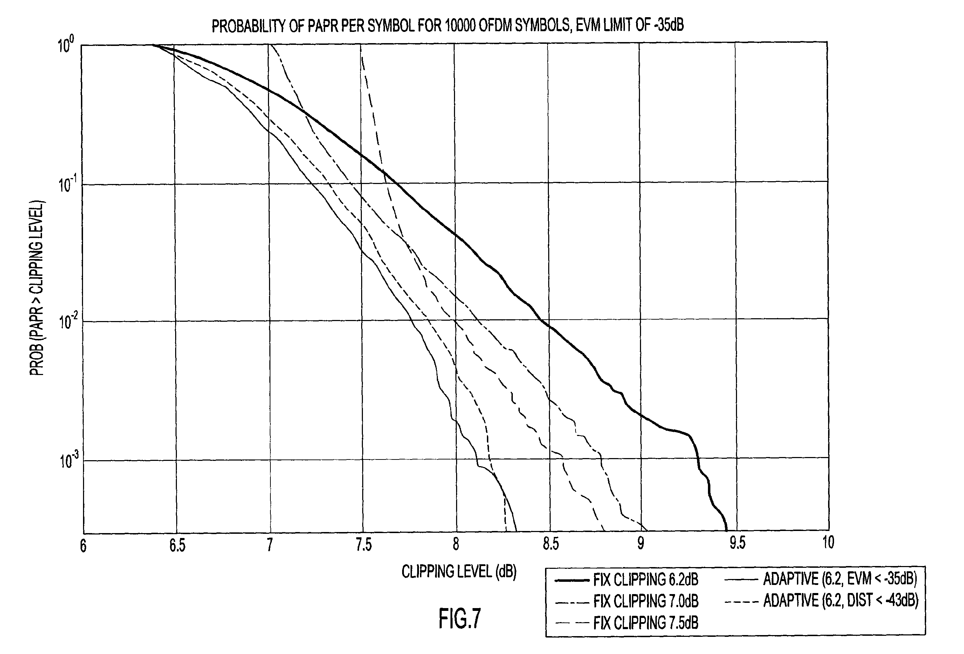

FIG. 7 illustrates a plot of simulation results and shows the improvement of the adaptive clipping techniques described herein over a fixed clipping technique. In this simulation, oversampling of 4 is used and the modulation/coding scheme of the symbol is 64 quadrature amplitude modulation. The initial clipping level for this simulation is 6.2 dB. In the plot shown in FIG. 7, the peak-to-average ratio (PAPR) of each symbol was computed and the probability of the PAPR is depicted for 10000 symbols. The total gain when compared to the un-clipped OFDM symbol is 3 dB at 0.1%. The gain at 0.1% of PAPR is about 0.7 dB compared to fixed clipping techniques. Using distortion as the signal quality metric instead of EVM has similar results with 0.6 dB gain compared to fixed clipping techniques. As explained above, computation complexity of distortion is extremely low.

The adaptive clipping techniques described herein provide improved crest factor or PAPR reduction than other techniques heretofore known. Each symbol is treated individually and the amount of clipping is determined for each symbol in order to achieve a desired or target EVM (or distortion). Using this adaptive or "soft" clipping technique, an EVM of a desired level can be guaranteed and as a result there is no need for in-band post-processing of the symbol. Moreover, since each symbol is guaranteed to achieve the desired EVM, various post-clipping filtering operation may be used. The filter techniques that are faster in real-time may be used instead of FFT-based filtering methods. Consequently, the overall crest factor reduction solution is less expensive, yet still achieves a desired EVM performance.

In sum, in one form, a method is provided comprising clipping time-domain samples of a symbol with a clipping level; computing a signal quality of the symbol after it is clipped; determining whether the signal quality satisfies a predetermined criterion; adjusting the clipping level when the signal quality does not satisfy the predetermined criterion; repeating the clipping, computing, determining and adjusting until the signal quality satisfies the predetermined criterion; and outputting for supply to a transmitter in the wireless communication device the symbol clipped by the clipping level determined to satisfy the predetermined criterion.

In another form, an apparatus is provided comprising a modem configured to generate symbols for transmission, the modem configured to clip time-domain samples of a symbol prior to supplying the symbol for transmission; and a controller configured to compute a signal quality of the symbol after it is clipped, determine whether the signal quality satisfies a predetermined criterion, adjust the clipping level when the signal quality does not satisfy the predetermined criterion and control the modem to repeat the clipping operation for a new clipping level, and repeat the compute, determine, adjust and control operations until the signal quality satisfies the predetermined criterion.

In still another form, one or more computer readable storage media are provided encoded with software comprising computer executable instructions and when the software is executed operable to: compute a signal quality of the a symbol to be transmitted after is clipped with a clipping level; determine whether the signal quality satisfies a predetermined criterion; adjust the clipping level when the signal quality does not satisfy the predetermined criterion and control the modem to repeat the clipping operation for a new clipping level; and repeat the compute, determine, adjust and control operations until the signal quality satisfies the predetermined criterion.

The techniques described herein are is useful in connection with any communication technology using OFDM techniques, such as WiFi™, WiMAX™, Long Term Evolution (LTE), as well as other technologies that using non-OFDM techniques.

In embodiments, techniques are provided for crest factor reduction of a symbol to be transmitted by a communication device. The symbol may be an orthogonal frequency division multiplexed (OFDM) formatted symbol. In a communication device, samples of the symbol are clipped with a clipping level. A signal quality of the symbol is computed after it is clipped. A determination is made as to whether the signal quality satisfies a predetermined criterion. When the signal quality does not satisfy the predetermined criterion, the clipping level is adjusted. The clipping, computing, determining and adjusting operations are repeated until the signal quality satisfies the predetermined criterion. The symbol clipped by the clipping level determined to result in satisfying the predetermined criterion is output for supply to a transmitter in the communication device. Techniques for computing for error vector magnitude that are faster and less computationally intensive are provided, as well as a computation for distortion that can be used as a measure of error vector magnitude

The above description is intended by way of example only. Various modifications and structural changes may be made therein without departing from the scope of the concepts described herein and within the scope and range of equivalents of the claims.

**Claims**

1. A method comprising:

in a communication device, for a symbol to be transmitted, clipping time-domain samples of the symbol with a clipping level;

computing a signal quality of the symbol after it is clipped;

determining whether the signal quality satisfies a predetermined criterion;

adjusting the clipping level when the signal quality does not satisfy the predetermined criterion;

repeating the clipping, computing, determining and adjusting until the signal quality satisfies the predetermined criterion; and

outputting for supply to a transmitter in the communication device the symbol clipped by the clipping level determined to satisfy the predetermined criterion.

2. The method of claim 1, wherein adjusting comprises incrementally increasing the clipping level at each iteration.

3. The method of claim 1 or 2, wherein clipping, computing, determining, adjusting, repeating and outputting are performed for each of a plurality of symbols to be transmitted such that each symbol is clipped by a corresponding clipping level determined to result in the signal quality satisfying the predetermined criterion.

4. The method of claim 1, 2 or 3, and further comprising setting the predetermined criterion based on a highest modulation/coding scheme for the symbol.

5. The method of any preceding claim, wherein computing the error quality comprises computing an error vector magnitude, and wherein determining comprises comparing the error vector magnitude with threshold to determine whether the error vector magnitude is greater than or equal to the threshold.

6. The method of claim 5, wherein computing the error vector magnitude comprises computing

$$\frac{\sqrt{\frac{1}{LN}\left(\Delta_t^H B \Delta_t\right)}}{M_{\max}},$$

$\Delta_t = x - x_c$ represents a time error of the clipped symbol, $x$ is a vector that represents the symbol in the time-domain, $x_c$ is the clipped symbol vector, $B$ is $N_c$ x $N_c$ matrix with $b_{ij}$ elements of

$$b_{ij} = \sum_{k=(L-1)N/2+1}^{(L+1)N/2} e^{\frac{j2\pi(i-j)k}{LN}}, \quad N \text{ is the number of time-}$$

domain samples of the symbol, Nc is the number time-domain samples that are clipped, $L$ is an interpolation ratio and $H$ is the Hermitian operation.

7. The method of any of claims 1 to 4, wherein computing the signal quality comprises computing a distortion measure, and wherein determining comprises comparing the distortion measure with a threshold.

8. The method of claim 7, wherein computing the distortion measure comprises computing

$$\frac{1}{\sqrt{LN}}\sum_{i\in C}\left|\Delta_t(i)\right|^2, \quad \text{where } \|.\|^2 \text{ is the norm opera-}$$

tion, $N$ is the number of time-domain samples of the symbol, Nc is the number time-domain samples that are clipped, $L$ is an interpolation ratio, $\Delta_t = x - x_c$ represents a time error of the clipped symbol, $x$ is a vector that represents the symbol in the time-domain and $x_c$ is the clipped symbol vector and i is the index of samples in a set $C$ that are clipped.

9. The method of any of claims 1 to 4, wherein clipping, computing, determining, adjusting and outputting are performed with respect to an orthogonal frequency division multiplexed (OFDM) symbol.

10. An apparatus comprising:

a modem configured to generate symbols for transmission, the modem configured to clip time-domain samples of a symbol prior to supplying the symbol for transmission; and

a controller configured to compute a signal quality of the symbol after it is clipped, determine whether the signal quality satisfies a predetermined criterion, adjust the clipping level when the signal quality does not satisfy the predetermined criterion and control the modem to repeat the clipping operation for a new clipping level, and repeat the compute, determine, adjust and control operations until the signal quality satisfies the predetermined criterion.

11. The apparatus of claim 10, wherein:

the modem is further configured to output each symbol clipped by the clipping level determined by the controller to satisfy the predetermined criterion; and/or

wherein the controller is further configured to set the predetermined criterion for a symbol based on a highest modulation/coding scheme for the symbol.

12. The apparatus of any of claims 10 to 11, wherein the controller is configured to compute, determine and adjust for each of a plurality of orthogonal frequency division multiplexed (OFDM) symbols to be transmitted such that each OFDM symbol is clipped by a corresponding clipping level determined to result in the signal quality satisfying the predetermined criterion.

**13.** The apparatus of any of claims 10 to 12, wherein the controller is configured to compute an error vector magnitude or a distortion measure as the signal quality; and/or

wherein the controller is configured to adjust by incrementally increasing the clipping level at each iteration.

**14.** A computer program product, such as one or more computer readable storage media, encoded with software comprising computer executable instructions and when the software is executed operable to:

compute a signal quality of a symbol to be transmitted after is clipped with a clipping level;
determine whether the signal quality satisfies a predetermined criterion;
adjust the clipping level when the signal quality does not satisfy the predetermined criterion and control the modem to repeat the clipping operation for a new clipping level; and
repeat the compute, determine, adjust and control operations until the signal quality satisfies the predetermined criterion.

**15.** The computer readable storage media of claim 14, further comprising any one or any combination of the following:

the instructions that are operable to compute, determine, adjust, repeat and output are performed to for each of a plurality of symbols to be transmitted such that each symbol is clipped by a corresponding clipping level determined to result in the signal quality satisfying the predetermined criterion;
the instructions that are operable to compute comprise instructions that are operable to compute an error vector magnitude as the signal quality;
the instructions that are operable to compute comprise instructions that are operable to compute a distortion measure as the signal quality;
further comprising instructions that are operable to set the predetermined criterion for a symbol based on a highest modulation/coding scheme for the symbol;
the instructions that are operable to adjust comprise instructions that are operable to incrementally increase the clipping level at each iteration;
the instructions that are operable to compute, determine, adjust and repeat are performed with respect to orthogonal frequency division multiplexed (OFDM) symbols.

FIG.1

EP 2 437 452 A1

**100**

110 — NEW SYMBOL TO BE TRANSMITTED ?

120 — DETERMINE HIGHEST MODULATION/CODING SCHEME (MCS) FOR THE SYMBOL

130 — SUPPLY INITIAL CLIPPING LEVEL TO CLIPPING BLOCK TO CLIP SAMPLES OF SYMBOL

140 — COMPUTE SIGNAL QUALITY OF RESULTING CLIPPED SYMBOL

150 — DOES SIGNAL QUALITY SATISFY PREDETERMINED CRITERION (DEPENDING ON HIGHEST MCS) ?

YES

NO

160 — SEND CLIPPED SAMPLES OF THE SYMBOL TO FILTER AND THEN TO TRANSMITTER

165 — NEXT SYMBOL

170 — INCREASE CLIPPING LEVEL AND SUPPLY TO CLIPPING BLOCK TO CLIP SAMPLES OF SYMBOL

FIG.2

FIG.3

FIG.4

FIG.5

DISTORTION VS. EVM FOR A GIVEN CLIPPING LEVEL

DISTORTION (dB)

EVM (dB)

FIG.6

CL LEVEL=6.2dB
CL LEVEL=7.0dB
CL LEVEL=7.5dB

EP 2 437 452 A1

13

FIG.7

**Europäisches Patentamt**
**European Patent Office**
**Office européen des brevets**

# EUROPEAN SEARCH REPORT

Application Number

EP 11 18 3728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/101502 A1 (NAVIDPOUR SEYED M [US] ET AL NAVIDPOUR SEYED MOHAMMAD [US] ET AL) 1 May 2008 (2008-05-01) | 1-5,7, 9-15 | INV. H04L27/26 |
| A | * paragraph [0058] * <br> * paragraph [0060] - paragraph [0062] * <br> * figure 12 * | 6,8 | |
| X | WANZHI MA ET AL: "Adaptive Step Size for OFDM CFR with Cognitive Clipping", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 September 2010 (2010-09-23), pages 1-4, XP031827569, ISBN: 978-1-4244-3708-5 | 1-5,7, 9-15 | |
| A | * Section III., 1st paragraph * <br> * figures 1, 2 * <br> * Section V. * | 6,8 | |
| A | Farid Dowla: "Handbook of RF and Wireless Technologies", 7 November 2003 (2003-11-07), Newnes, Oxford, UK, XP002669268, ISBN: 0750676957 pages 313-313, * last paragraph * | 7 | TECHNICAL FIELDS SEARCHED (IPC) <br><br> H04L |
| A | EP 1 953 979 A1 (NOKIA SIEMENS NETWORKS GMBH [DE]) 6 August 2008 (2008-08-06) * claim 3 * | 1,10,14 | |

The present search report has been drawn up for all claims

| Place of search | Date of completion of the search | Examiner |
|---|---|---|
| Berlin | 10 February 2012 | Farese, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 3728

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2012

| Patent document cited in search report | | Publication date | Patent family member(s) | | Publication date |
|---|---|---|---|---|---|
| US 2008101502 | A1 | 01-05-2008 | NONE | | |
| EP 1953979 | A1 | 06-08-2008 | AT | 474408 T | 15-07-2010 |
| | | | CN | 101682594 A | 24-03-2010 |
| | | | EP | 1953979 A1 | 06-08-2008 |
| | | | EP | 2119160 A1 | 18-11-2009 |
| | | | US | 2011075575 A1 | 31-03-2011 |
| | | | WO | 2008092916 A1 | 07-08-2008 |

EPO FORM P0459

For more details about this annex : see Official Journal of the European Patent Office, No. 12/82